Europäisches Patentamt

European Patent Office

Office européen des brevets

(11) Veröffentlichungsnummer: **0 187 168**
A1

## (12) EUROPÄISCHE PATENTANMELDUNG

(21) Anmeldenummer: 84116221.7

(22) Anmeldetag: 22.12.84

(51) Int. Cl.⁴: **F 16 B 13/02**

(43) Veröffentlichungstag der Anmeldung:
16.07.86 Patentblatt 86/29

(84) Benannte Vertragsstaaten:
AT BE CH DE FR GB IT LI LU NL SE

(71) Anmelder: EJOT Adolf Böhl GmbH & Co. KG
Adolf-Böhl-Strasse 7
D-5920 Bad Berleburg 4 - Berghausen(DE)

(72) Erfinder: Riecke, Ernst-Hermann, Dipl.-Ing.
Ostpreussenstrasse 5
D-5920 Bad Berleburg 4(DE)

(74) Vertreter: Missling, Arne, Dipl.-Ing. et al,
Patentanwälte Dipl.-Ing. R. Schlee Dipl.-Ing. A. Missling
Bismarckstrasse 43
D-6300 Giessen(DE)

(54) Befestigungselement.

(57) Befestigungselemente für die Befestigung von wärme- und schallisolierenden Platten an einer Unterkonstruktion weisen ein Halteteil (1) auf, mit einer großflächigen Druckplatte (3) aus Kunststoff und einer mit der Druckplatte (3) verbundenen Hülse. Ein Stift (2) aus Metall ist in die Hülse (4) einschlagbar und reicht mit seinem Kopf im eingeschlagenen Zustand bis zur Druckplatte (3). Im hinteren Bereich ist der Stift (2) mit Kunststoff (15) ummantelt, wobei die Ummantelung auch die Stirnfläche des Stiftes (2) umhüllt. Bei eingeschlagenem Stift (2) liegt dieser in seinem ummantelten Bereich (15) dicht am Halteteil (1) an und verschließt die Hülsenbohrung (5) nach außen. Zur Ausbildung dieser Befestigungselemente für eine rasche und einfache Anbringung ist ein Teil der Hülse (4) als Knautschzone (11) ausgebildet, so daß dieses beim Anliegen an die Unterkonstruktion verformt wird.

Fig. 1

EP 0 187 168 A1

Croydon Printing Company Ltd.

Dipl.-Ing. Richard Schlee
Dipl.-Ing. Arne Missling

6300 Lahn-Giessen 1, 21.12.1984
Bismarckstrasse 43
Telefon: (0041) 79079

0187168

EJOT Adolf Böhl, GmbH & Co.KG,
5920 Bad Berleburg 4


Befestigungselement


Die Erfindung betrifft ein Befestigungselement, insbesondere für die Befestigung von wärme- und schallisolierenden Platten an eine Unterkonstruktion, mit einem Halteteil, der eine großflächige Druckplatte aus Kunststoff und eine mit der Druckplatte einstückige Hülse aufweist und einen Stift aus Metall, der in die Hülse einschlagbar ist und im eingeschlagenen Zustand bis zur Druckplatte reicht und im Bereich seines hinteren Endes mit Kunststoff ummantelt ist, wobei die Ummantelung auch die hintere Stirnfläche des Stiftes umhüllt und bei eingeschlagenem Stift dieser in seinem ummantelten Bereich dicht am Halteteil anliegt und die Hülsenbohrung nach außen abschließt.

Ein Befestigungselement der eingangs beschriebenen Art ist z.B. aus der EP-A 1 0074469 bekannt. Dieses Befestigungselement dient zur Befestigung von wärme- und schallisolierenden Materialien. Die Hülse ist bei diesem bekannten Befestigungselement in Form eines Dübels ausgebildet, d.h. die Bohrung in der Hülse hat einen wesentlich kleineren Durchmesser als der Stift, so daß sich die Hülse unter Einwirkung des eingeschlagenen Stiftes spreizt und so eine Verankerung in der Unterkonstruktion bewirkt. Diese Art der Befestigung setzt jedoch immer voraus, daß in die Unterkonstruktion eine

- 2 -

Bohrung eingebracht wird, in die dann die Hülse eingeschoben wird. Erst im Anschluß hieran kann die eigentliche Befestigung durch Einschlagen des Stiftes in die Hülse erfolgen. Die Befestigung durch den Stift ist zwar in kurzer Zeit und ohne großen Aufwand zu erstellen, jedoch erfordern die vorbereitenden Arbeiten, d.h. die Herstellung der Bohrungen, einen vergleichsweise großen Zeitaufwand.

Der Erfindung liegt die Aufgabe zugrunde, ein Befestigungselement der eingangs genannten Art so auszubilden, daß dieses in vergleichsweise kurzer Zeit zu montieren ist und darüberhinaus für die Befestigung von Platten mit unterschiedlicher Dicke verwendbar ist.

Diese Aufgabe wird mit den Merkmalen des kennzeichnenden Teils des Anspruches 1 gelöst.

Ein erfindungsgemäß ausgebildetes Befestigungselement besitzt somit eine Hülse, die vorteilhaft kürzer ist als der einzuschlagende Stift, wobei diese Hülse entweder über ihre gesamte Länge oder über einen Teil ihrer Länge mit einer Knautschzone ausgebildet ist, die vorteilhaft durch ringförmige Wandstärkenverminderung erhalten werden kann. Die Länge der Hülse entspricht somit der maximalen Dicke der an der Unterkonstruktion zu befestigenden Platten. Die Befestigung kann in einfachster Weise durch Einschlagen des Stiftes mit einem Hammer erfolgen, vorteilhaft wird jedoch der Stift eingeschossen.

Beim Auftreffen der Hülse auf der Unterkonstruktion wird diese verformt und staucht sich in axialer Richtung, während der Stift in die Unterkonstruktion eindringt. Die Hülse wird dabei solange deformiert, bis die großflächige Druckplatte auf der zu befestigenden Platte zur Auflage kommt. Der Kopf des Stiftes, der für eine gute Wärmeisolierung kunststoffummantelt ist, liegt dann dicht am Halteteil und schließt die Hülsenbohrung nach außen hin ab. Durch Einstellung der Schlagkraft kann der Druck eingestellt werden, mit dem die Druckplatte an der zu befestigenden Platte anliegt.

Die an der Hülse angeformte Knautschzone gewährleistet ferner, daß die Hülse mit Druck an der Unterkonstruktion anliegt, so daß der Stift über die gesamte Länge, wie er in die Platte eintaucht, allseitig von der Hülse umgeben ist. Des weiteren wird durch die Knautschzone erreicht, daß ein Befestigungselement mit einer vorgegebenen Länge der Hülse für die Befestigung von Platten mit unterschiedlicher Dicke eingesetzt werden kann. Der Arbeitsbereich entspricht somit dem möglichen Verformungsweg der Knautschzone.

Weitere vorteilhafte Ausgestaltungen der Erfindung gehen aus den Unteransprüchen in Verbindung mit Beschreibung und Zeichnung hervor.

Ein Ausführungsbeispiel der Erfindung ist im folgenden anhand der Zeichnung näher beschrieben, in dieser zeigen:

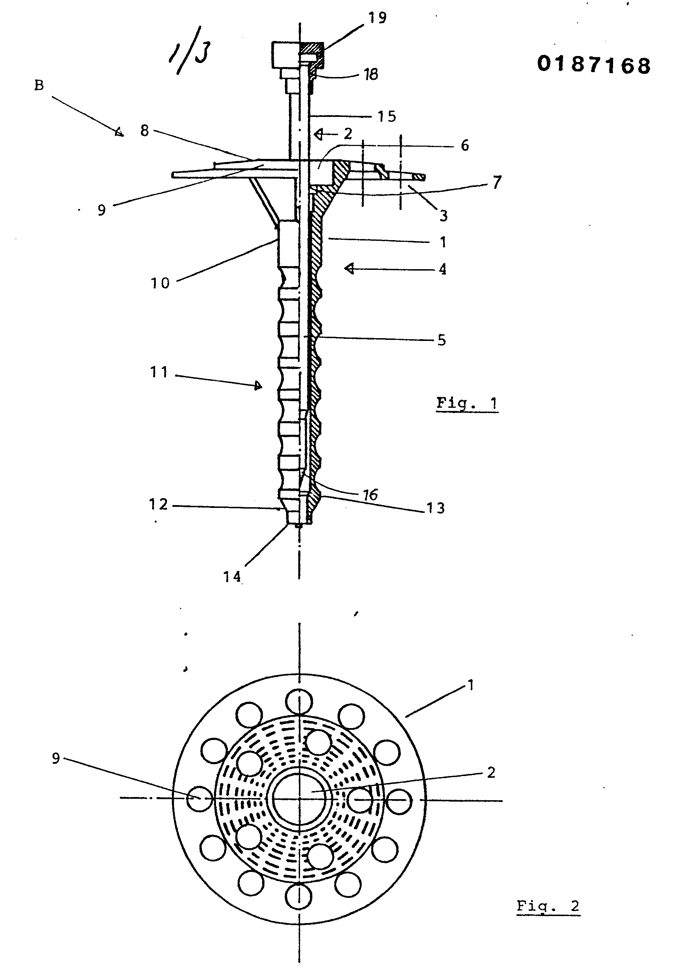

Fig. 1 einen Längsschnitt durch ein erfindungsgemäß ausgebildetes Befestigungselement mit eingesetztem, jedoch nicht eingeschlagenem Stift,

Fig. 2 eine Draufsicht auf das Befestigungselement nach Fig. 1,

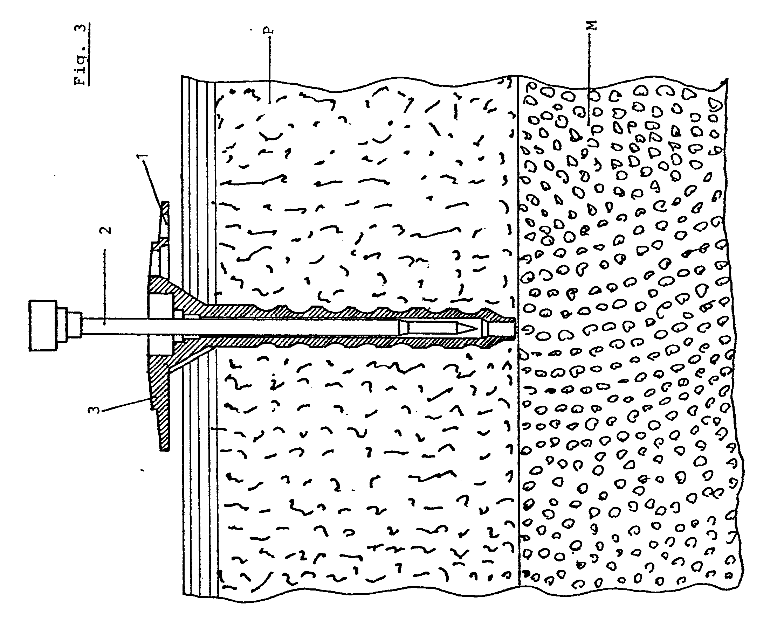

Fig. 3 einen Längschnitt durch ein Befestigungselement nach Fig.1, das in die Wand eingesetzt ist, bei dem jedoch der Stift noch nicht in die Unterkonstruktion greift und

Fig. 4 einen Längsschnitt entsprechend Fig.3, jedoch im endgültigen Befestigungszustand.

Das ingesamt mit B bezeichnete Befestigungselement hat einen Halteteil 1 und einen Stift 2.

Der Halteteil 1 besteht aus einer Druckplatte 3 und einer Hülse 4, die einstückig mit der Druckplatte 3 ausgebildet ist. Der Halter 1 besteht aus einem Kunststoff-Spritzteil.

Die Hülsenbohrung 5 durchsetzt die Hülse 4 und weist einen gleichmäßigen Durchmesser auf, der dem Durchmesser des Stiftes 2 angepaßt ist. Im Bereich des an die Druckplatte 3 anschließenden Durchmessers erweitert sich der Hülsendurchmesser etwas und bildet einen erweiterten Abschnitt 7, an den sich eine Vertiefung 6 anschließt, die teilweise im Bereich der Druckplatte 3 liegt. Der Durchmesser der Vertiefung 6 ist größer als der Durchmesser des Abschnittes 7. Die Vertiefung 6 hat eine hohe zylindrische Wand, die über eine Abrundung 8 in die Oberseite der Druckplatte 3 übergeht. Die Bodenfläche der Vertiefung 7 ist eben. Der erweiterte Abschnitt 10 hat ebenfalls eine hohe zylindische Wand.

In der Druckplatte 3 befindet sich ein Kranz aus insgesamt fünf Bohrungen 9, von denen jede einen aus einem unteren Abschnitt von relativ großem Durchmesser und einem oberen Abschnitt von relativ kleinem Durchmesser besteht.

Die Hülse 4 hat einen glatten Teil 10, der sich an die Druckplatte 3 anschließt, sowie eine Knautschzone 11, die bis zum Ende der Hülse 4 reicht. Die Knautschzone 11 wird von ringförmigen Bereichen 12 gebildet, die eine geringere Wandstärke aufweisen als die sich anschließenden Bereiche 13. Man erreicht hierdurch einen Ziehharmonikaeffekt, wobei bei entsprechendem, auf das Ende 14 einwirkenden Druck die Hülse um in etwa der Summe der Bereiche 12 verkürzt werden kann. Bei einer entsprechenden Länge der Knautschzone 11 wie auch der Größe der Bereiche 12 läßt sich die Hülse 4 um einen erheblichen Teil ihrer Gesamtlänge verkürzen.

Der Stift 2 besteht aus einem Metallstift, vorzugsweise einem Stahlstift, und weist einen Kunststoffüberzug 15 auf. Der Stahlstift hat an seinem vorderen Ende eine Nagelspitze 16. Hieran schließt sich ein etwas verjüngtes Teil 17 an, das in der Regel dazu bestimmt ist, in die Unterkonstruktion einzudringen. Im Anschluß hieran ist der Stift 2 zylindrisch ausgebildet und weist einen Durchmesser auf, der dem Durchmesser der Bohrung der Hülse 4 angepaßt ist.

Im oberen Bereich des Stiftes 2 sind umlaufende Rillen 18 angeordnet, durch die eine Verzahnung mit dem Kunststoffüberzug 15 erhalten wird. Am hinteren Ende bildet der Kunststoffüberzug 15 einen Kopf 19. Der Kopf 19 hat eine kugelförmig gekrümmte Oberseite und eine zylindrische Umfangsfläche.

Der Kunststoffüberzug 15 besteht aus einem thermoplastischen Kunststoff und wird durch Umspritzen des Stiftes 2 hergestellt.

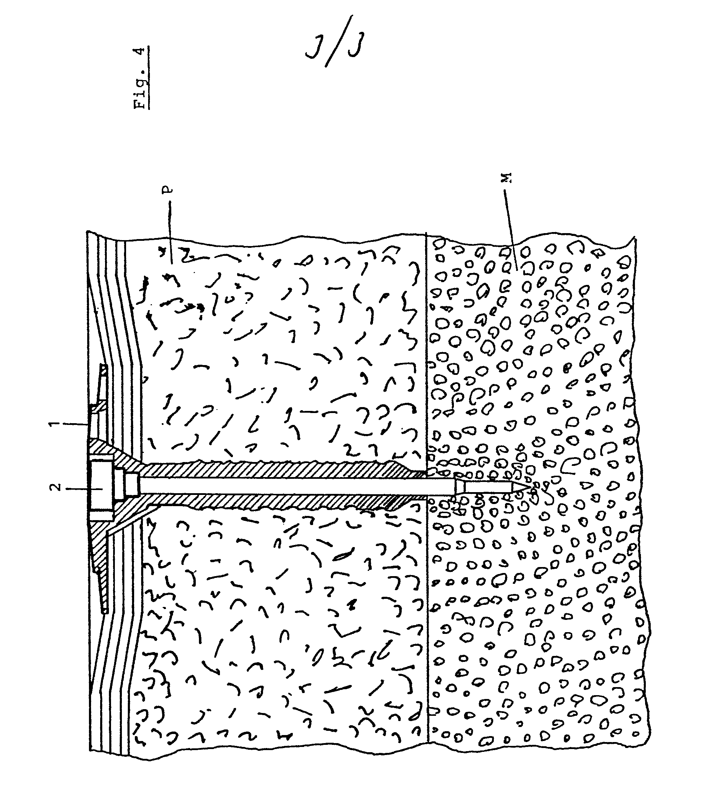

Im Lieferzustand ist der Stift 2 in die Hülse 4 eingesteckt, so daß dieser unverlierbar gehalten ist. Die Montage des Befestigungselementes erfolgt vorteilhaft mit einem Schußgerät, wobei die Hülse einschließlich des Stiftes durch die Platte P gedrückt wird, so daß die Hülse anschließend an der Unterkonstruktion M zur Anlage kommt. Der Stift 2 dringt mit seinem vorderen Ende in die Unterkonstruktion ein, wobei der Kopf 19 zur Anlage auf der Druckplatte 3 kommt. Hierdurch wird gleichzeitig die Druckplatte einschließlich der Hülse zur Unterkonstruktion M hin bewegt, wobei die Hülse an der Unterkonstruktion gestaucht wird, was aufgrund der eingebauten Knautschzone ohne weiteres möglich ist. Im fest montierten Zustand, wie er in Fig. 4 dargestellt ist, liegt die Druckplatte fest an der Platte 2 an, wobei die Länge der Hülse sich der Dicke der Platte P angepaßt hat. Die Befestigung des Befestigungselementes in der Unterkonstruktion ist zumindest gleich gut wie bei Verwendung eines Dübels.

Der Vorteil eines erfindungsgemäß ausgebildeten Befestigungselementes besteht darin, daß dieses in einem Arbeitsgang und vorteilhaft mittels eines Schußgerätes befestigt werden kann, was die benötigten Arbeitszeiten im Vergleich zu herkömmlichen Befestigungselementen, insbesondere von solchen, die auf Dübelbasis arbeiten, wesentlich herabsetzt. Darüberhinaus kann bei entsprechender Ausgestaltung der Knautschzone das Befestigungselement für unterschiedlich große Plattenstärken eingesetzt werden, was die Lagerhaltung reduziert.

Ansprüche:

1. Befestigungselement, insbesondere für die Befestigung von wärme- und schallisolierenden Platten (P) an einer Unterkonstruktion (M), mit einem Halteteil (1), der eine großflächige Druckplatte (3) aus Kunststoff und eine mit der Druckplatte (3) einstückige Hülse aufweist und einem Stift (2) aus Metall, der in die Hülse (4) einschlagbar ist und im eingeschlagenen Zustand bis zur Druckplatte (3) reicht und im Bereich seines hinteren Endes mit Kunststoff (15) ummantelt ist, wobei die Ummantelung auch die Stirnfläche des Stiftes (2) umhüllt und bei eingeschlagenem Stift (2) dieser in seinem ummantelten Bereich (15) dicht am Halteteil (1) anliegt und die Hülsenbohrung (5) nach außen abschließt, dadurch gekennzeichnet, daß zumindest ein Teil der Hülse (4) als Knautschzone (11) ausgebildet ist.

2. Befestigungselement nach Anspruch 1, dadurch gekennzeichnet, daß der Stift (2) länger als die Hülse (1) ist.

3. Befestigungselement nach Anspruch 1 oder 2, dadurch gekennzeichnet, daß die Knautschzone (5) am Ende (14) der Hülse (4) beginnt.

4. Befestigungselement nach einem der Ansprüche 1 bis 3, dadurch gekennzeichnet, daß die Knautschzone durch mehrere ringförmige Bereiche mit gegenüber den übrigen Teilen der Hülse verminderter Wandstärke gebildet ist.

5. Befestigungselement nach einem der Ansprüche 1 bis 4, dadurch gekennzeichnet, daß der Stift (2) an seinem hinteren Ende einen Kopf (19) aufweist, der mindestens an seiner gesamten Außenfläche aus Kunststoff besteht.

6. Befestigungselement nach Anspruch 5, dadurch gekennzeichnet, daß der Halteteil (1) eine Vertiefung (6) aufweist, die zur Aufnahme des Kopfes (19) des Stiftes (2) bestimmt ist.

7. Befestigungselement nach Anspruch 6, dadurch gekennzeichnet, daß der Kopf (19) bei voll eingeschlagenem Stift (2) mit seiner Unterfläche dicht an einer Anlagefläche des Halteteiles (1) anliegt.

8. Befestigungselement nach einem der Ansprüche 2 bis 7, dadurch gekennzeichnet, daß die Vertiefung (6) eine kreisrunde Umfangsfläche hat, die bei eingeschlagenem Stift (2) dicht an der Umfangsfläche des Kopfes (19) des Stiftes (2) anliegt.

9. Befestigungselement nach einem der Ansprüche 1 bis 8, dadurch gekennzeichnet, daß der Stift (2) über einen Teil seiner Länge mit Kunststoff ummantelt ist.

10. Befestigungselement nach Anspruch 9, dadurch gekennzeichnet, daß der ummantelte Teil des Stiftes (2) in die Hülsenbohrung (5) eingreift.

11. Befestigungselement nach einem der Ansprüche 1 bis 10, dadurch gekennzeichnet, daß der Stift (2) aus einem hohlen Material besteht, daß er mit einem Schußapparat in die Unterkonstruktion einschießbar ist.

0187168

Fig. 1

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | DE-C- 945 665 (FALCON FASTENERS) * Figur 6 * | 1,3 | F 16 B 13/02 |
| | --- | | |
| A | DE-B-2 047 185 (MACKENZIE et al.) * Figur 5 * | 6,7 | |
| | --- | | |
| Y | DE-A-2 339 894 (STREIF et al.) * Figur 1 * | 1 | |
| | --- | | |
| Y | DE-A-2 728 449 (GEIGER) * Figuren 2-5 * | 1 | |
| | --- | | |
| A | AT-B- 251 258 (BRAMBILLASCA) * Figur 1 * | 7,8 | |
| | --- | | RECHERCHIERTE SACHGEBIETE (Int. Cl.4) |
| A | AT-B- 296 576 (ZENHÄUSERN) * Figur 1 * | 6-8 | F 16 B 13/00 E 04 B 1/48 |
| | --- | | |
| Y | GB-A-2 049 859 (UPAT) * Figuren 4-5 * | 1,3 | |
| | --- | | |
| A | GB-A-2 077 877 (A. FISCHER) * Figur 1 * | 2,9 | |
| | --- | | |
| Y | US-A-1 476 836 (PLEISTER) * Figuren 4-6 * | 1,3 | |
| | ---    -/- | | |

Der vorliegende Recherchenbericht wurde für alle Patentansprüche erstellt.

| Recherchenort BERLIN | Abschlußdatum der Recherche 31-07-1985 | Prüfer ZAPP E |
|---|---|---|

Europäisches
Patentamt

**EUROPÄISCHER RECHERCHENBERICHT**

**0187168**
Nummer der Anmeldung

EP 84 11 6221

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| D,A | EP-A-0 074 469 (A. BÖHL SCHRAUBEN- UND KUNSTSTOFFWERK) ----- | | |

RECHERCHIERTE SACHGEBIETE (Int. Cl.4)

Der vorliegende Recherchenbericht wurde für alle Patentansprüche erstellt.

| Recherchenort BERLIN | Abschlußdatum der Recherche 31-07-1985 | Prüfer ZAPP E |
|---|---|---|